# EUROPÄISCHE PATENTSCHRIFT

(11) **EP 2 044 345 B1**
(45) Veröffentlichungstag und Bekanntmachung des Hinweises auf die Patenterteilung: **10.11.2010**
(21) Anmeldenummer: 07786924.6
(22) Anmeldetag: 29.06.2007
(51) Int. Cl.: F16H 3/66

(54) **GETRIEBE MIT MINDESTENS ZWEI PLANETENRADSTUFEN**
TRANSMISSION WITH AT LEAST TWO PLANET GEAR STAGES
TRANSMISSION AVEC AU MOINS DEUX ÉTAGES DE PIGNONS PLANÉTAIRES

(30) Priorität: 22.07.2006 DE 102006033983
(43) Veröffentlichungstag der Anmeldung: 08.04.2009
(73) Patentinhaber: ZF Friedrichshafen AG, 88038 Friedrichshafen (DE)
(72) Erfinder: ILLERHAUS, Dietmar, 88131 Lindau (DE); MÜLLER, Klaus, 88074 Meckenbeuren (DE); HANKER, Gert, 88074 Meckenbeuren (DE); OBERGASSER, Michael, 88045 Friedrichshafen (DE)
(86) Internationale Anmeldenummer: PCT/EP2007/056544
(87) Internationale Veröffentlichungsnummer: WO 2008/012170

(56) Entgegenhaltungen:
- DE-A1- 2 721 719
- DE-A1- 10 307 789
- DE-A1- 10 336 520
- JP-A- 2 296 035
- US-A- 3 922 932
- US-A- 4 089 238
- US-A- 5 876 300
- US-A1- 2002 065 164

## Beschreibung

Die vorliegende Erfindung betrifft ein Getriebe mit einem Gehäuse, einer Antriebswelle, einer Abtriebswelle und mindestens zwei Planetenradstufen zur Übertragung einer Drehung von der Antriebswelle auf die Abtriebswelle, wobei die Planetenradstufen jeweils die Elemente Sonnenrad, Hohlrad und Planetenradträger umfassen und mindestens zwei schaltbare Kupplungseinrichtungen zum Verbinden der Antriebswelle mit einem der Elemente der Planetenradstufen vorgesehen sind, während die Hohlräder mit Hilfe weiterer schaltbarer Kupplungseinrichtungen mit dem Gehäuse verbunden werden können.

Aus dem Stand der Technik sind Getriebe, insbesondere Automatikgetriebe, mit einer Antriebswelle, einer Abtriebswelle und mehreren Planetenradstufen zur Übertragung einer Drehung von der Antriebswelle auf die Abtriebswelle bekannt. So beschreibt die gattungsmäßige DE 27 21 719 A1 beispielsweise ein drei- oder mehrstufiges Getriebe. Um die Antriebswelle des bekannten Getriebes mit einem Element der Planetenradstufen, wie beispielsweise dem Hohlrad, Planetenradträger oder Sonnenrad, verbinden zu können, ist eine Kupplungstrommel mit zwei Schaltkupplungen vorgesehen. Die beiden Schaltkupplungen sind in axialer Richtung hintereinander liegend in der Kupplungstrommel angeordnet. Die Hohlräder der Planetenradstufen können über Schaltbremsen an dem Gehäuse des Getriebes festgelegt werden. Durch das Schalten der Schaltkupplungen und der Schaltbremsen können die entsprechenden Gänge des Getriebes eingelegt bzw. gewählt werden.

Die bekannte Lösung ist einerseits mit dem Nachteil behaftet, dass das Getriebe eine große Ausdehnung in axialer Richtung hat, was die Verwendung des Getriebes in denjenigen Fahrzeugtypen erschwert, die in axialer Richtung keinen ausreichenden Bauraum zur Verfügung stellen können. Andererseits wirken durch das Schalten des Getriebes Axialkräfte auf die einzelnen Elemente der Planetenradstufen ein, die zu einer hohen Beanspruchung der Elemente selbst wie auch der anderen Getriebebestandteile führen.

Der vorliegenden Erfindung liegt somit die Aufgabe zugrunde, ein Getriebe zu schaffen, das eine geeignete Ableitung der auf die Elemente der Planetenradsätze einwirkenden Axialkräfte ermöglicht, um die Beanspruchung der Getriebeteile zu reduzieren, und in axialer Richtung weniger Bauraum benötigt.

Die Lösung dieser Aufgabe erfolgt anhand der in Patentanspruch 1 angegebenen Merkmale. Vorteilhafte Ausführungsformen der Erfindung sind Gegenstand der Unteransprüche.

Die Erfindung hat somit den Vorteil, dass die auf die Elemente der Planetenradsätze einwirkenden Axialkräfte beim Schaltvorgang auf einfache Weise über die Lager auf das Gehäuse übertragen werden, so dass die Beanspruchung der anderen Getriebeteile reduziert ist.

In einer bevorzugten Ausführungsform des erfindungsgemäßen Getriebes überlappen sich die einander benachbarten Lager zumindest teilweise, wenn diese in axialer Richtung betrachtet werden. Auf diese Weise wird eine direkte und geradlinige Kraftübertragung durch die Lager erzielt, ohne dass größere Momente auftreten.

In einer besonders bevorzugten Ausführungsform des erfindungsgemäßen Getriebes sind die schaltbaren Kupplungseinrichtungen zum Verbinden der Antriebswelle mit einem der Elemente der Planetenradstufen in radialer Richtung hintereinander angeordnet. Auf diese Weise wird ein Getriebe mit einer besonders geringen Länge in axialer Richtung geschaffen.

In einer weiteren vorteilhaften Ausführungsform des erfindungsgemäßen Getriebes sind die erste Kupplungseinrichtung und die zweite Kupplungseinrichtung an dem ersten Verbindungsteil angeordnet. Das erste Verbindungsteil kann beispielsweise in der Art einer Kupplungstrommel ausgebildet sein.

Gemäß einer weiteren vorteilhaften Ausführungsform des erfindungsgemäßen Getriebes sind die Sonnenräder der zweiten und dritten Planetenradstufe drehfest an einer gemeinsamen zweiten Sonnenradwelle angeordnet, wobei an der zweiten Sonnenradwelle ein sich radial nach außen erstreckendes zweites Verbindungsteil angeordnet ist, das über die erste Kupplungseinrichtung mit der Antriebswelle verbunden werden kann.

In einer weiteren vorteilhaften Ausführungsform des erfindungsgemäßen Getriebes ist der Planetenradträger der zweiten Planetenradstufe an einer ersten Hilfswelle angeordnet, wobei an der ersten Hilfswelle ein sich radial nach außen erstreckendes drittes Verbindungsteil angeordnet ist, das über die zweite Kupplungseinrichtung mit der Antriebswelle verbunden werden kann.

In einer weiteren vorteilhaften Ausführungsform des erfindungsgemäßen Getriebes ist der Planetenradträger der zweiten Planetenradstufe über ein viertes Verbindungsteil drehfest mit dem Hohlrad der dritten Planetenradstufe verbunden.

Gemäß einer weiteren vorteilhaften Ausführungsform des erfindungsgemäßen Getriebes ist der Planetenradträger der ersten Planetenradstufe an einer zweiten Hilfswelle angeordnet und über ein fünftes Verbindungsteil drehfest mit dem Hohlrad der zweiten Planetenradstufe verbunden.

In einer weiteren vorteilhaften Ausführungsform des erfindungsgemäßen Getriebes ist ein erstes Lager in axialer Richtung zwischen einem Anschlag am Gehäuse und dem ersten Verbindungsteil angeordnet, Auch dieser Anschlag kann beispielsweise als umlaufender Ring ausgebildet sein, der fest an dem Gehäuse angeordnet ist.

In einer weiteren bevorzugten Ausführungsform des erfindungsgemäßen Getriebes ist ein zweites Lager in axialer Richtung zwischen dem ersten Verbindungsteil und dem zweiten Verbindungsteil angeordnet.

Gemäß einer weiteren vorteilhaften Ausführungsform des erfindungsgemäßen Getriebes ist ein drittes Lager in axialer Richtung zwischen dem zweiten Verbindungsteil und dem dritten Verbindungsteil angeordnet.

In einer weiteren vorteilhaften Ausführungsform des erfindungsgemäßen Getriebes ist ein viertes Lager in axialer Richtung zwischen dem dritten Verbindungsteil und dem Anschlagteil angeordnet.

In einer weiteren besonders bevorzugten Ausführungsform des erfindungsgemäßen Getriebes ist ein fünftes Lager in axialer Richtung zwischen dem Anschlagteil und der Stirnseite der zweiten Hilfswelle angeordnet. Auf diese Weise können die auf die zweite Hilfswelle wirkenden Axialkräfte auf das fünfte Lager übertragen werden.

In einer weiteren vorteilhaften Ausführungsform des erfindungsgemäßen Getriebes ist ein sechstes Lager in axialer Richtung zwischen dem Planetenradträger der ersten Planetenradstufe und dem Planetenradträger der zweiten Planetenradstufe angeordnet.

Gemäß einer weiteren vorteilhaften Ausführungsform des erfindungsgemäßen Getriebes ist ein siebtes Lager in axialer Richtung zwischen dem Planetenradträger der zweiten Planetenradstufe und dem Sonnenrad der zweiten Planetenradstufe angeordnet.

In einer weiteren vorteilhaften Ausführungsform des erfindungsgemäßen Getriebes ist ein achtes Lager in axialer Richtung zwischen dem Sonnenrad der dritten Planetenradstufe und dem Planetenradträger der dritten Planetenradstufe angeordnet.

In einer weiteren bevorzugten Ausführungsform des erfindungsgemäßen Getriebes ist der Planetenradträger der dritten Planetenradstufe mit der Abtriebswelle verbunden.

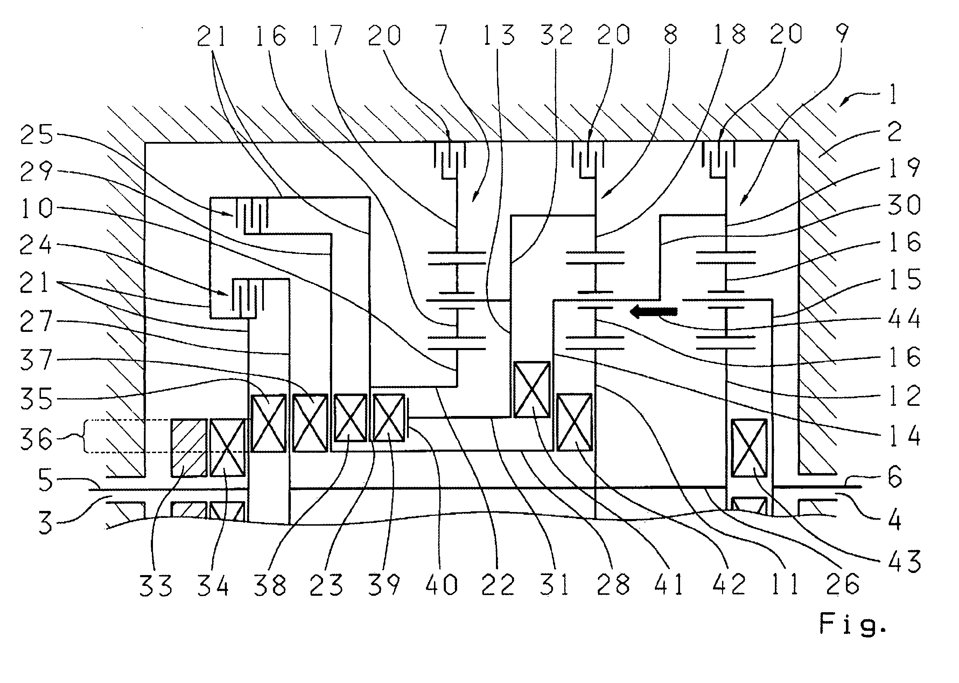

Die Erfindung wird im Folgenden anhand einer beispielhaften Ausführungsform unter Bezugnahme auf die zugehörige Zeichnung näher erläutert. Die einzige Figur zeigt eine schematische Seitenansicht der oberen Hälfte einer Ausführungsform des erfindungsgemäßen Getriebes.

Das dargestellte Automatikgetriebe 1 weist ein das Getriebe im Wesentlichen umgebendes Gehäuse 2 auf, wobei auf einer Seite eine erste Öffnung 3 und auf der Gegenseite eine zweite Öffnung 4 vorgesehen ist. Das Getriebe 1 umfasst ferner eine Antriebswelle 5, die sich durch die erste Öffnung 3 in das Gehäuse 2 erstreckt, während sich durch die zweite Öffnung 4 eine Abtriebswelle 6 aus dem Gehäuse 2 erstreckt. Die Antriebswelle 5 und die Abtriebswelle 6 sind hintereinander liegend koaxial angeordnet.

Innerhalb des Gehäuses 2 zwischen der Antriebs- und der Abtriebswelle 5. 6 sind ferner eine erste Planetenradstufe 7, eine zweite Planetenradstufe 8 und eine dritte Planetenradstufe 9 zur Übertragung einer Drehung der Antriebswelle 5 auf die Abtriebswelle 6 vorgesehen. Die Planetenradstufen 7, 8, 9 umfassen jeweils ein Sonnenrad 10, 11, 12, einen Planetenradträger 13, 14, 15, an dem mehrere Planetenräder 16 angeordnet sind, und ein Hohlrad 17, 18, 19. Der Planetenradträger 15 der dritten Planetenradstufe 9 ist drehfest mit der Abtriebswelle 6 verbunden. An der Innenwand des Gehäuses 2 sind schaltbare Kupplungseinrichtungen 20 vorgesehen, mit deren Hilfe die Hohlräder 17, 18, 19 auf ihrer dem Sonnenrad 10, 11, 12 abgewandten Seite mit dem Gehäuse 2 verbunden werden können, um das Hohlrad 17, 18, 19 bei entsprechender Schaltposition an dem Gehäuse 2 festzulegen.

Innerhalb des Gehäuses 2 ist an der Antriebswelle 5 ein erstes Verbindungsteil 21 vorgesehen. Das Verbindungsteil 21 erstreckt sich zunächst radial nach außen, um anschließend wieder radial nach innen zu verlaufen" wobei es drehfest mit einer ersten Sonnenradwelle 22 verbunden ist, an der das Sonnenrad 10 der ersten Planetenradstufe 7 angeordnet ist. Die erste Sonnenradwelle 22 ist koaxial zu der Antriebs- und Abtriebswelle 5, 6 angeordnet. Ausgehend von dem der ersten Sonnenradwelle 22 zugewandten Ende des ersten Verbindungsteils 21 erstreckt sich ferner ein Anschlagteil 23 radial nach innen, auf dessen Bedeutung später eingegangen wird. An dem ersten Verbindungsteil 21 sind ferner eine schaltbare erste Kupplungseinrichtung 24 und eine schaltbare zweite Kupplungseinrichtung 25 zum Verbinden der Antriebswelle 5 mit einem der Elemente der Planetenradstufen 7, 8, 9 vorgesehen. Die erste Kupplungseinrichtung 24 und die zweite Kupplungseinrichtung 25 sind dabei in radialer Richtung hintereinander angeordnet, wodurch die Länge des Getriebes 1 in axialer Richtung geringer ist.

Die Sonnenräder 11, 12 der zweiten und dritten Planetenradstufe 8, 9 sind drehfest auf einer gemeinsamen zweiten Sonnenradwelle 26 angeordnet, die koaxial zu der Antriebswelle 5, der Abtriebswelle 6 und der ersten Sonnenradwelle 22 angeordnet ist. An ihrem der Antriebswelle 5 zugewandten Ende weist die zweite Sonnenradwelle 26 ein sich radial nach außen erstreckendes zweites Verbindungsteil 27 auf, das über die erste Kupplungseinrichtung 24 mit der Antriebswelle 5 verbunden werden kann.

Der Planetenradträger 14 der zweiten Planetenradstufe 8 ist an einer ersten Hilfswelle 28 angeordnet. An dem der Antriebswelle 5 zugewandten Ende der ersten Hilfswelle 28, die ebenfalls koaxial zu der Antriebswelle 5 und der Abtriebswelle 6 angeordnet ist, ist ein sich radial nach außen erstreckendes drittes Verbindungsteil 29 angeordnet, das über die zweite Kupplungseinrichtung 25 mit der Antriebswelle 5 verbunden werden kann. Ferner ist der Planetenradträger 14 der zweiten Planetenradstufe 8 über ein viertes Verbindungsteil 30 drehfest mit dem Hohlrad 19 der dritten Planetenradstufe 9 verbunden. Darüber hinaus ist der Planetenradträger 13 der ersten Planetenradstufe 7 an einer zweiten Hilfswelle 31 angeordnet und über ein fünftes Verbindungsteil 32 drehfest mit dem Hohlrad 18 der zweiten Planetenradstufe 8 verbunden.

Das Gehäuse 2 weist einen umlaufenden Anschlag 33 im Bereich der ersten Öffnung 3 auf, wobei sich die Antriebswelle 5 durch den Anschlag 33 erstreckt. Zwischen der der ersten Öffnung 3 abgewandten Seite des Anschlags 33 und dem ersten Verbindungsteil 21 ist in axialer Richtung ein erstes Lager 34 angeordnet. Etwaige auf das erste Verbindungsteil 21 wirkende Axialkräfte können somit über das erste Lager 34 und den Anschlag 33 auf das Gehäuse 2 übertragen werden.

In Richtung der Abtriebswelle 6 ist hinter dem ersten Lager 34 ein zweites Lager 35 vorgesehen. Das zweite Lager 35 ist in axialer Richtung zwischen dem ersten Verbindungsteil 21 und dem zweiten Verbindungsteil 27 angeordnet. Die somit benachbarten Lager 34, 35 sind dabei derart ausgebildet, dass sie sich zumindest teilweise überlappen, wenn diese in axialer Richtung betrachtet werden. Dies ist in der Figur anhand des Überlappungsbereiches 36 angedeutet. Diese Überlappung gilt auch für die nachstehend noch erwähnten, einander benachbarten Lager.

Ein drittes Lager 37 ist benachbart zu dem zweiten Lager 35 in axialer Richtung zwischen dem zweiten Verbindungsteil 27 und dem dritten Verbindungsteil 29 angeordnet. Ein viertes Lager 38 ist benachbart zu dem dritten Lager 37 in axialer Richtung zwischen dem dritten Verbindungsteil 29 und dem Anschlagteil 23 an dem ersten Verbindungsteil 21 angeordnet. Ein fünftes Lager 39 ist benachbart zu dem vierten Lager 38 in axialer Richtung zwischen dem Anschlagteil 23 und einer Stirnseite 40 der zweiten Hilfswelle 31 angeordnet. Darüber hinaus ist ein sechstes Lager 41, das dem fünften Lager 39 benachbart ist, in axialer Richtung zwischen dem Planetenradträger 13 der ersten Planetenradstufe 7 und dem Planetenradträger 14 der zweiten Planetenradstufe 8 angeordnet. Weiterhin ist ein siebtes Lager 42, das dem sechsten Lager 41 benachbart ist, in axialer Richtung zwischen dem Planetenradträger 14 der zweiten Planetenradstufe 8 und dem Sonnenrad 11 der zweiten Planetenradstufe 8 angeordnet. Des Weiteren ist ein achtes Lager 43, das dem siebten Lager 42 benachbart ist, in axialer Richtung zwischen dem Sonnenrad 12 der dritten Planetenradstufe 9 und dem Planetenradträger 15 der dritten Planetenradstufe 9 angeordnet.

Die vorgenannten Lager 34, 35, 37, 38, 39, 41, 42, 43 sind derart hintereinander angeordnet, dass die auf das jeweilige Element der Planetenradstufen 7, 8, 9 einwirkenden Axialkräfte einfach auf das Gehäuse 2 übertragen werden können, wie dies nachstehend anhand eines Beispiels beschrieben wird. Sollte beispielsweise eine Axialkraft 44 auf die Planetenräder 16 des Planetenradträgers 14 der zweiten Planetenradstufe 8 einwirken, so wird diese über den Planetenradträger 14, das sechste Lager 41, die Hilfswelle 31, das fünfte Lager 39, den Anschlag 23, das vierte Lager 38, das dritte Verbindungsteil 29, das dritte Lager 37, das zweite Verbindungsteil 27, das zweite Lager 35, das erste Verbindungsteil 21 und das erste Lager 34 auf den Anschlag 33 und somit auf das Gehäuse 2 übertragen.

### Bezugszeichen

- 1: Automatikgetriebe
- 2: Gehäuse
- 3: erste Öffnung
- 4: zweite Öffnung
- 5: Antriebswelle
- 6: Abtriebswelle
- 7: erste Planetenradstufe
- 8: zweite Planetenradstufe
- 9: dritte Planetenradstufe
- 10: Sonnenrad
- 11: Sonnenrad
- 12: Sonnenrad
- 13: Planetenradträger
- 14: Planetenradträger
- 15: Planetenradträger
- 16: Planetenräder
- 17: Hohlrad
- 18: Hohlrad
- 19: Hohlrad
- 20: Kupplungseinrichtung
- 21: erstes Verbindungsteil
- 22: erste Sonnenradwelle
- 23: Anschlagteil
- 24: erste Kupplungseinrichtung
- 25: zweite Kupplungseinrichtung
- 26: zweite Sonnenradwelle
- 27: zweites Verbindungsteil
- 28: erste Hilfswelle
- 29: drittes Verbindungsteil
- 30: viertes Verbindungsteil
- 31: zweite Hilfswelle
- 32: fünftes Verbindungsteil
- 33: Anschlag
- 34: erstes Lager
- 35: zweites Lager
- 36: Überlappungsbereich
- 37: drittes Lager
- 38: viertes Lager
- 39: fünftes Lager
- 40: Stirnseite
- 41: sechstes Lager
- 42: siebtes Lager
- 43: achtes Lager
- 44: Axialkraft

## Patentansprüche

1. Getriebe mit einem Gehäuse (2), einer Antriebswelle (5), einer Abtriebswelle (6) und zumindest einer ersten, einer zweiten und einer dritten Planetenradstufe (7, 8, 9) zur Übertragung einer Drehung von der Antriebswelle (5) auf die Abtriebswelle (6), wobei die Planetenradstufen (7, 8, 9) jeweils die Elemente Sonnenrad (10, 11, 12), Hohlrad (17, 18, 19) und Planetenradträger (13, 14, 15) umfassen und mindestens zwei schaltbare Kupplungseinrichtungen (24, 25) zum Verbinden der Antriebswelle (5) mit einem der Elemente der Planetenradstufen (7, 8, 9) vorgesehen sind, während die Hohlräder (17, 18, 19) mit Hilfe weiterer schaltbarer Kupplungseinrichtungen (20) mit dem Gehäuse (2) verbindbar sind und die Antriebswelle (5) über ein sich radial nach außen erstreckendes erstes Verbindungsteil (21) drehfest mit einer ersten Sonnenradwelle (22) verbunden ist, an der das Sonnenrad (10) der ersten Planetenradstufe (7) angeordnet ist, **dadurch gekennzeichnet, dass** das Getriebe (1) in axialer Richtung angeordnete Lager (34, 35, 37, 38, 39, 41, 42, 43) aufweist, die derart hintereinander angeordnet sind, dass die auf die Elemente der Planetenradstufen (7, 8, 9) einwirkenden Axialkräfte über die Lager (34, 35, 37, 38, 39, 41, 42, 43) auf das Gehäuse (2) übertragbar sind, wobei an dem ersten Verbindungsteil (21) ein radial nach innen hervorstehendes Anschlagteil (23) vorgesehen ist, welches zwischen zwei der in axialer Richtung angeordneten Lager (38, 39) angeordnet ist.

2. Getriebe nach Anspruch 1, **dadurch gekennzeichnet, dass** sich die einander benachbarten Lager (34, 35, 37, 38, 39, 41, 42, 43) zumindest teilweise überlappen, wenn diese in axialer Richtung betrachtet werden.

3. Getriebe nach einem der vorangehenden Ansprüche, **dadurch gekennzeichnet, dass** die schaltbaren Kupplungseinrichtungen (24, 25) zum Verbinden der Antriebswelle (5) mit einem der Elemente der Planetenradstufen (7, 8, 9) in radialer Richtung hintereinander angeordnet sind.

4. Getriebe nach einem der vorangehenden Ansprüche, **dadurch gekennzeichnet, dass** die erste Kupplungseinrichtung (24) und die zweite Kupplungseinrichtung (25) an dem ersten Verbindungsteil (21) angeordnet sind.

5. Getriebe nach einem der vorangehenden Ansprüche, **dadurch gekennzeichnet, dass** die Sonnenräder (11, 12) der zweiten und dritten Planetenradstufe (8, 9) drehfest an einer gemeinsamen zweiten Sonnenradwelle (26) angeordnet sind, wobei an der zweiten Sonnenradwelle (26) ein sich radial nach außen erstreckendes zweites Verbindungsteil (27) angeordnet ist, das über die erste Kupplungseinrichtung (24) mit der Antriebswelle (5) verbindbar ist.

6. Getriebe nach einem der vorangehenden Ansprüche, **dadurch gekennzeichnet, dass** der Planetenradträger (14) der zweiten Planetenradstufe (8) an einer ersten Hilfswelle (28) angeordnet ist, wobei an der ersten Hilfswelle (28) ein sich radial nach außen erstreckendes drittes Verbindungsteil (29) angeordnet ist, das über die zweite Kupplungseinrichtung (25) mit der Antriebswelle (5) verbindbar ist.

7. Getriebe nach Anspruch 6, **dadurch gekennzeichnet, dass** der Planetenradträger (14) der zweiten Planetenradstufe (8) über ein viertes Verbindungsteil (30) drehfest mit dem Hohlrad (19) der dritten Planetenradstufe (9) verbunden ist.

8. Getriebe nach einem der vorangehenden Ansprüche, **dadurch gekennzeichnet, dass** der Planetenradträger (13) der ersten Planetenradstufe (7) an einer zweiten Hilfswelle (31) angeordnet und über ein fünftes Verbindungsteil (32) drehfest mit dem Hohlrad (18) der zweiten Ptanetenradstufe (8) verbunden ist.

9. Getriebe nach einem der vorangehenden Ansprüche, **dadurch gekennzeichnet, dass** ein erstes Lager (34) in axialer Richtung zwischen einem Anschlag (33) am Gehäuse (2) und dem ersten Verbindungsteil (21) angeordnet ist.

10. Getriebe nach Anspruch 9, **dadurch gekennzeichnet, dass** ein zweites Lager (35) in axialer Richtung zwischen dem ersten Verbindungsteil (21) und dem zweiten Verbindungsteil (27) angeordnet ist.

11. Getriebe nach einem der Ansprüche 9 oder 10, **dadurch gekennzeichnet, dass** ein drittes Lager (37) in axialer Richtung zwischen dem zweiten Verbindungsteil (27) und dem dritten Verbindungsteil (29) angeordnet ist.

12. Getriebe nach einem der Ansprüche 9 bis 11, **dadurch gekennzeichnet, dass** ein viertes Lager (38) in axialer Richtung zwischen dem dritten Verbindungsteil (29) und dem Anschlagteil (23) angeordnet ist.

13. Getriebe nach einem der Ansprüche 9 bis 12, **dadurch gekennzeichnet, dass** ein fünftes Lager (39) in axialer Richtung zwischen dem Anschlagteil (23) und der Stirnseite (40) der zweiten Hilfswelle (31) angeordnet ist.

14. Getriebe nach einem der Ansprüche 9 bis 13, **dadurch gekennzeichnet, dass** ein sechstes Lager (41) in axialer Richtung zwischen dem Planetenradträger (13) der ersten Planetenradstufe (7) und dem Planetenradträger (14) der zweiten Planetenradstufe (8) angeordnet ist.

15. Getriebe nach einem der Ansprüche 9 bis 14, **dadurch gekennzeichnet, dass** ein siebtes Lager (42) in axialer Richtung zwischen dem Planetenradträger (14) der zweiten Planetenradstufe (8) und dem Sonnenrad (11) der zweiten Planetenradstufe (8) angeordnet ist.

16. Getriebe nach einem der Ansprüche 9 bis 15, **dadurch gekennzeichnet, dass** ein achtes Lager (43) in axialer Richtung zwischen dem Sonnenrad (12) der dritten Planetenradstufe (9) und dem Planetenradträger (15) der dritten Planetenradstufe (9) angeordnet ist.

17. Getriebe nach einem der vorangehenden Ansprüche, **dadurch gekennzeichnet, dass** der Planetenradträger (15) der dritten Planetenradstufe (9) mit der Abtriebswelle (6) verbunden ist.

## Claims

1. Transmission having a housing (2), having a drive input shaft (5), having a drive output shaft (6) and having at least one first, one second and one third planet gear stage (7, 8, 9) for transmitting a rotation from the drive input shaft (5) to the drive output shaft (6), with the planet gear stages (7, 8, 9) each comprising the elements of sun gear (10, 11, 12), internal gear (17, 18, 19) and planet gear carrier (13, 14, 15) and with at least two switchable clutch devices (24, 25) being provided for connecting the drive input shaft (5) to one of the elements of the planet gear stages (7, 8, 9), while the internal gears (17, 18, 19) can be connected by means of further switchable clutch devices (20) to the housing (2), and with the drive input shaft (5) being connected by means of a radially outwardly extending first connecting part (21) to a first sun gear shaft (22) for conjoint rotation therewith, on which first sun gear shaft (22) the sun gear (10) of the first planet gear stage (7) is arranged, **characterized in that** the transmission (1) has bearings (34, 35, 37, 38, 39, 41, 42, 43) which are arranged in the axial direction and which are arranged one behind the other in such a way that the axial forces acting on the elements of the planet gear stages (7, 8, 9) can be transmitted via the bearings (34, 35, 37, 38, 39, 41, 42, 43) to the housing (2), with a radially inwardly projecting stop part (23) being provided on the first connecting part (21), which stop part (23) is arranged between two of the bearings (38, 39) arranged in the axial direction.

2. Transmission according to Claim 1, **characterized in that** the bearings (34, 35, 37, 38, 39, 41, 42, 43) which are adjacent to one another at least partially overlap as viewed in the axial direction.

3. Transmission according to one of the preceding claims, **characterized in that** the switchable clutch devices (24, 25) for connecting the drive input shaft (5) to one of the elements of the planet gear stages (7, 8, 9) are arranged one behind the other in the radial direction.

4. Transmission according to one of the preceding claims, **characterized in that** the first clutch device (24) and the second clutch device (25) are arranged on the first connecting part (21).

5. Transmission according to one of the preceding claims, **characterized in that** the sun gears (11, 12) of the second and third planet gear stages (8, 9) are arranged on a common second sun gear shaft (26) for conjoint rotation therewith, with a radially outwardly extending second connecting part (27) being arranged on the second sun gear shaft (26), which second connecting part (27) can be connected by means of the first clutch device (24) to the drive input shaft (5).

6. Transmission according to one of the preceding claims, **characterized in that** the planet gear carrier (14) of the second planet gear stage (8) is arranged on a first auxiliary shaft (28), with a radially outwardly extending third connecting part (29) being arranged on the first auxiliary shaft (28), which third connecting part (29) can be connected by means of the second clutch device (25) to the drive input shaft (5).

7. Transmission according to Claim 6, **characterized in that** the planet gear carrier (14) of the second planet gear stage (8) is connected by means of a fourth connecting part (30) to the internal gear (19) of the third planet gear stage (9) for conjoint rotation therewith.

8. Transmission according to one of the preceding claims, **characterized in that** the planet gear carrier (13) of the first planet gear stage (7) is arranged on a second auxiliary shaft (31) and is connected by means of a fifth connecting part (32) to the internal gear (18) of the second planet gear stage (8) for conjoint rotation therewith.

9. Transmission according to one of the preceding claims, **characterized in that** a first bearing (34) is arranged in the axial direction between a stop (33) on the housing (2) and the first connecting part (21).

10. Transmission according to Claim 9, **characterized in that** a second bearing (35) is arranged in the axial direction between the first connecting part (21) and the second connecting part (27).

11. Transmission according to one of Claims 9 and 10, **characterized in that** a third bearing (37) is arranged in the axial direction between the second connecting part (27) and the third connecting part (29).

12. Transmission according to one of Claims 9 to 11, **characterized in that** a fourth bearing (38) is arranged in the axial direction between the third connecting part (29) and the stop part (23).

13. Transmission according to one of Claims 9 to 12, **characterized in that** a fifth bearing (39) is arranged in the axial direction between the stop part (23) and the end side (40) of the second auxiliary shaft (31).

14. Transmission according to one of Claims 9 to 13, **characterized in that** a sixth bearing (41) is arranged in the axial direction between the planet gear carrier (13) of the first planet gear stage (7) and the planet gear carrier (14) of the second planet gear stage (8).

15. Transmission according to one of Claims 9 to 14, **characterized in that** a seventh bearing (42) is arranged in the axial direction between the planet gear carrier (14) of the second planet gear stage (8) and the sun gear (11) of the second planet gear stage (8).

16. Transmission according to one of Claims 9 to 15, **characterized in that** an eighth bearing (43) is arranged in the axial direction between the sun gear (12) of the third planet gear stage (9) and the planet gear carrier (15) of the third planet gear stage (9).

17. Transmission according to one of the preceding claims, **characterized in that** the planet gear carrier (15) of the third planet gear stage (9) is connected to the drive output shaft (6).

## Revendications

1. Transmission avec un boîtier (2), un arbre d'entraînement (5), un arbre de sortie (6) et au moins un premier, un deuxième et un troisième étages de pignons planétaires (7, 8, 9) pour le transfert d'une rotation de l'arbre d'entraînement (5) à l'arbre de sortie (6), les étages de pignons planétaires (7, 8, 9) comprenant à chaque fois les éléments constitués par une roue solaire (10, 11, 12), une couronne (17, 18, 19) et un porte-satellites (13, 14, 15), et au moins deux dispositifs d'embrayage commutables (24, 25) étant prévus pour connecter l'arbre d'entraînement (5) à l'un des éléments des étages de pignons planétaires (7, 8, 9), tandis que les couronnes (17, 18, 19) peuvent être connectées à l'aide de dispositifs d'embrayage commutables supplémentaires (20) au boîtier (2) et l'arbre d'entraînement (5) étant connecté par le biais d'une première partie de connexion (21) s'étendant radialement vers l'extérieur de manière solidaire en rotation à un premier arbre de roue solaire (22), sur lequel la roue solaire (10) du premier étage de pignon planétaire (7) est disposée, **caractérisée en ce que** la transmission (1) présente des paliers (34, 35, 37, 38, 39, 41, 42, 43) disposés dans la direction axiale, qui sont disposés les uns derrière les autres de telle sorte que les forces axiales agissant sur les éléments des étages de pignons planétaires (7, 8, 9) puissent être transmises par le biais des paliers (34, 35, 37, 38, 39, 41, 42, 43) au boîtier (2), une partie de butée (23) saillant radialement vers l'intérieur étant prévue sur la première partie de connexion (21), et étant disposée entre deux paliers (38, 39) disposés dans la direction axiale.

2. Transmission selon la revendication 1, **caractérisée en ce que** les paliers (34, 35, 37, 38, 39, 41, 42, 43) mutuellement adjacents se chevauchent au moins en partie, lorsqu'ils sont considérés dans la direction axiale.

3. Transmission selon l'une quelconque des revendications précédentes, **caractérisée en ce que** les dispositif d'embrayage commutables (24, 25) sont disposés l'un derrière l'autre dans la direction radiale pour connecter l'arbre d'entraînement (5) à l'un des éléments des étages de pignons planétaires (7, 8, 9).

4. Transmission selon l'une quelconque des revendications précédentes, **caractérisée en ce que** le premier dispositif d'embrayage (24) et le deuxième dispositif d'embrayage (25) sont disposés sur la première partie de connexion (21).

5. Transmission selon l'une quelconque des revendications précédentes, **caractérisée en ce que** les roues solaires (11, 12) des deuxième et troisième étages de pignons planétaires (8, 9) sont disposées de manière solidaire en rotation sur un deuxième arbre de roue solaire commun (26), une deuxième partie de connexion (27) s'étendant radialement vers l'extérieur étant disposée sur le deuxième arbre de roue solaire (26), et pouvant être connectée par le biais du premier dispositif d'embrayage (24) à l'arbre d'entraînement (5).

6. Transmission selon l'une quelconque des revendications précédentes, **caractérisée en ce que** le porte-satellites (14) du deuxième étage de pignon planétaire (8) est disposé sur un premier arbre auxiliaire (28), une troisième partie de connexion (29) s'étendant radialement vers l'extérieur étant disposée sur le premier arbre auxiliaire (28), et pouvant être connectée par le biais du deuxième dispositif d'embrayage (25) à l'arbre d'entraînement (5).

7. Transmission selon la revendication 6, **caractérisée en ce que** le porte-satellites (14) du deuxième étage de pignon planétaire (8) est connecté par le biais d'une quatrième partie de connexion (30) de manière solidaire en rotation à la couronne (19) du troisième étage de pignon planétaire (9).

8. Transmission selon l'une quelconque des revendications précédentes, **caractérisée en ce que** le porte-satellites (13) du premier étage de pignon planétaire (7) est disposé sur un deuxième arbre auxiliaire (31) et est connecté par le biais d'une cinquième partie de connexion (32) de manière solidaire en rotation à la couronne (18) du deuxième étage de pignon planétaire (8).

9. Transmission selon l'une quelconque des revendications précédentes, **caractérisée en ce qu'**un premier palier (34) est disposé dans la direction axiale entre une butée (33) sur le boîtier (2) et la première partie de connexion (21) .

10. Transmission selon la revendication 9, **caractérisée en ce qu'**un deuxième palier (35) est disposé dans la direction axiale entre la première partie de connexion (21) et la deuxième partie de connexion (27).

11. Transmission selon l'une quelconque des revendications 9 ou 10, **caractérisée en ce qu'**un troisième palier (37) est disposé dans la direction axiale entre la deuxième partie de connexion (27) et la troisième partie de connexion (29) .

12. Transmission selon l'une quelconque des revendications 9 à 11, **caractérisée en ce qu'**un quatrième palier (38) est disposé dans la direction axiale entre la troisième partie de connexion (29) et la partie de butée (23).

13. Transmission selon l'une quelconque des revendications 9 à 12, **caractérisée en ce qu'**un cinquième palier (39) est disposé dans la direction axiale entre la partie de butée (23) et le côté frontal (40) du deuxième arbre auxiliaire (31) .

14. Transmission selon l'une quelconque des revendications 9 à 13, **caractérisée en ce qu'**un sixième palier (41) est disposé dans la direction axiale entre le porte-satellites (13) du premier étage de pignon planétaire (7) et le porte-satellites (14) du deuxième étage de pignon planétaire (8).

15. Transmission selon l'une quelconque des revendications 9 à 14, **caractérisée en ce qu'**un septième palier (42) est disposé dans la direction axiale entre le porte-satellites (14) du deuxième étage de pignon planétaire (8) et la roue solaire (11) du deuxième étage de pignon planétaire (8).

16. Transmission selon l'une quelconque des revendications 9 à 15, **caractérisée en ce qu'**un huitième palier (43) est disposé dans la direction axiale entre la roue solaire (12) du troisième étage de pignon planétaire (9) et le porte-satellites (15) du troisième étage de pignon planétaire (9).

17. Transmission selon l'une quelconque des revendications précédentes, **caractérisée en ce que** le porte-satellites (15) du troisième étage de pignon planétaire (9) est connecté à l'arbre de sortie (6).
